# EUROPÄISCHE PATENTSCHRIFT

(11) **EP 0 711 385 B1**
(45) Veröffentlichungstag und Bekanntmachung des Hinweises auf die Patenterteilung: **16.12.1998**
(21) Anmeldenummer: 95917933.4
(22) Anmeldetag: 18.04.1995
(51) Int. Cl.: F04C 29/00, F04C 15/00, F16H 7/10

(54) **ANTRIEBSANORDNUNG**
DRIVE ARRANGEMENT
SYSTEME D'ENTRAINEMENT

(30) Priorität: 18.04.1994 DE 4413422
(43) Veröffentlichungstag der Anmeldung: 15.05.1996
(73) Patentinhaber: Boge Kompressoren, D-33739 Bielefeld (DE)
(72) Erfinder: BEUTEL, Wolfgang, D-32791 Lage (DE); EWERTOWSKI, Julius, D-32130 Enger (DE)
(74) Vertreter: Weber, Joachim, Dr.
(86) Internationale Anmeldenummer: EP9501443
(87) Internationale Veröffentlichungsnummer: WO9528570

(56) Entgegenhaltungen:
- DE-C- 138 124
- DE-C- 156 042
- GB-A- 2 093 149
- US-A- 4 094 205
- US-A- 4 568 030
- PATENT ABSTRACTS OF JAPAN vol. 4 no. 109 (E-020) ,6.August 1980 & JP,A,55 066248 (FUJI ELECTRIC CO. LTD.) 19.Mai 1980,

## Beschreibung

Die Erfindung bezieht sich auf eine Antriebsanordnung mit einem endlosen, umlaufenden Antriebselement, welches über ein Antriebsrad eines Motors und ein Abtriebsrad einer Arbeitsmaschine läuft, sowie mit einer Spanneinrichtung für das Antriebselement.

Antriebsanordnungen der beschriebenen Art sind in den vielfältigsten Ausgestaltungsformen bekannt, das Antriebselement kann beispielsweise als Keilriemen, Flachriemen, Kette etc. ausgebildet sein.

Insbesondere bei Riementrieben ist es erforderlich, die Riemenspannung exakt einzustellen. Eine zu hohe Riemenspannung führt zu einer Überlastung des Motors sowie des Arbeitsgerätes und zu vorzeitiger Abnutzung von Lagern, Dichtungen und dem Riemen. Bei Keilriemen führt eine um 10 % zu hohe Vorspannung zu einer Reduzierung der Lebensdauer um 20 %, bei einer Erhöhung der Vorspannung um 20 % sinkt die Lebensdauer um mehr als 50 %. Bei einer zu niedrigen Riemenspannung kann der Riemen rutschen, dies führt zu einer Erwärmung und zu einem kurzfristigen Verschleiß des Riemens. Weiterhin reduziert sich der Wirkungsgrad der Arbeitsmaschine ganz erheblich.

Zur Spannung des Antriebselementes ergeben sich aus dem Stand der Technik unterschiedliche Lösungen. Eine Lösung besteht darin, die zueinander parallelen Achsen des Motors und der Arbeitsmaschine durch eine Spannvorrichtung in ihrem Abstand zu verändern, d.h. entweder den Motor oder die Arbeitsmaschine auf einem Schlitten zu verschieben. Dabei ist es erforderlich, die Achse des Motors und der Arbeitsmaschine jeweils genau einzujustieren. Dies bereitet insbesondere beim Riemenwechsel erhebliche Schwierigkeiten. Weiterhin ist es nur schwer möglich, das Antriebselement/den Riemen in der gewünschten Weise zu spannen.

Ein weiteres Prinzip besteht darin, die Spannung des Antriebselementes/Riemens mittels einer Spannrolle durchzuführen. Diese kann innenliegend oder außenliegend angeordnet sein. Als nachteilig erweist es sich, daß eine zusätzliche Spannrolle eine zusätzliche Biegespannung im Riemen/Antriebselement erzeugt und dieses somit zusätzlich belastet. Diese zusätzliche Belastung ergibt sich beispielsweise durch ein Walken des Riemens, hierdurch erwärmt sich dieser und verschleißt. Weiterhin verhindert die Spannrolle den Umschließungswinkel des Antriebsrades bzw. des Abtriebsrades, wodurch unerwünschte Kräfte und Belastungen auftreten können.

Eine weitere Variante besteht darin, den Motor stationär auf einem Gestell zu lagern und die wesentlich leichtere Arbeitsmaschine auf einer Wippe anzuordnen. Die Wippe wird zur Spannung des Antriebselementes/Riemens mittels einer Feder vom Motor weggespannt. Hierbei ist es nachteilig, daß die Vorspannung genau einjustiert und häufig kontrolliert werden muß. Bei einer Längung des Riemens verändert sich die Vorspannung, so daß Schlupf auftreten kann. Nachteilig ist weiterhin, daß Ermüdungserscheinungen auftreten können, welche zu einer Verringerung der Vorspannkraft führen.

Die den nächstkommenden Stand der Technik bildende GB 20 93 149 A beschreibt eine Antriebseinheit für einen Lüfter, bei welcher eine Riemenscheibe auf einer pendelartigen Schwinge gelagert ist. Die auf einer Kreisbahn bewegbare Schwinge trägt zwei Motoren, einen Antriebsmotor und einen Hilfsmotor. Ähnlich einem Kniehebel-Mechanismus kann der Antriebsriemen durch eine Verlagerung des Schwenkwinkels der Schwinge gespannt werden. Zusätzlich ist es möglich, einen Federmechanismus vorzusehen, welcher ebenfalls zur Spannung des Antriebsriemens dienen kann.

Der Erfindung liegt die Aufgabe zugrunde, eine transportable Antriebsanordnung der eingangs genannten Art zu schaffen, welche bei einfachem Aufbau und einfacher, betriebssicherer Anwendbarkeit eine exakte Vorspannung des Antriebselements ermöglicht, bei welcher das Antriebselement auf einfache Weise gewechselt werden kann und welche bei einem Transport der Antriebsanordnung Beschädigungen des Antriebselements vermeidet.

Erfindungsgemäß wird die Aufgabe durch die Merkmale des Hauptanspruchs gelöst.

Die Unteransprüche zeigen weitere vorteilhafte Ausgestaltungen der Erfindung.

Erfindungsgemäß wird die Aufgabe somit unter anderen dadurch gelöst, daß der Motor auf einem Träger angeordnet ist, welcher lageveränderbar an einem Gestell, welches die Arbeitsmaschine trägt, gelagert ist und welcher sowohl durch die Gewichtskraft des Motors als auch durch eine im wesentlichen parallel zur Gewichtskraft des Motors wirkende Vorspannkraft einer Vorspanneinheit vertikal nach unten vorgespannt ist.

Die erfindungsgemäße Antriebsanordnung zeichnet sich durch eine Reihe erheblicher Vorteile aus. Da das Gewicht des Motors das Antriebselement vorspannt, ergibt sich eine definierte Spannkraft über die gesamte Standzeit des Antriebselementes. Längungen des Antriebselementes werden automatisch kompensiert. Da sich das Gewicht des Motors nicht ändert, wird durch diesen eine stets gleichbleibende Vorspannkraft aufgebracht.

Ein weiterer, wesentlicher Vorteil besteht darin, daß das Beschleunigungsmoment beim Anlaufen des Motors die Vorspannung des Riementriebes unterstützt. Diese wird somit möglicherweise sogar geringfügig erhöht, um einen Schlupf beim Anfahren des Motors auszuschließen. Hierdurch werden die auftretenden Beschleunigungskräfte sicher übertragen. Auch im Lastlauf des Motors trägt das Betriebsmoment zur Verstärkung der Vorspannung und Verminderung von Schlupf bei. Somit ist in jeder Betriebssituation ein schlupfloser Kraftfluß gewährleistet.

Durch die erfindungsgemäß vorgesehene zusätzliche Vorspanneinheit ist es möglich, auch bei leichteren Motoren eine ausreichende Vorspannkraft aufzubringen. Bei der beschriebenen Konstruktion muß die Vorspannkraft der Vorspanneinheit lediglich bei der Montage der Antriebsanordnung einjustiert werden, eine Nachstellung oder Wartung während des Betriebs ist nicht erforderlich. Weiterhin muß nach einem Riemenwechsel keine Einstellung der Vorspanneinheit erfolgen. Hieraus ergeben sich ganz erhebliche Vorteile der Betriebssicherheit der Lebensdauer des Antriebselementes. Weiterhin werden Wartungsfehler ausgeschlossen, die durch ungeübtes Personal bzw. durch unsachgemäßes Nachstellen einer Spanneinrichtung auftreten könnten.

Bei der Erfindung ist weiterhin vorgesehen, daß der Träger in Form einer um eine horizontale Achse schwenkbaren Wippe ausgebildet ist. Diese gestattet durch Wahl einer geeigneten wirksamen Hebellänge sowie einer entsprechenden Anordnung der horizontalen Achse die Aufbringung ausreichender Vorspannkräfte.

Das Antriebselement kann erfindungsgemäß in Form eines Keilriemens ausgebildet sein. Es können auch parallel zueinander mehrere Keilriemen vorgesehen sein.

Die Vorspanneinheit umfaßt eine Druckfeder, welche einstellbar ausgebildet ist. Hierbei ist es günstig, daß die Druckfeder mit einer Seite gegen das Gestell und mit ihrer anderen Seite gegen eine mit dem Träger verbundene Druckplatte anliegt und die Position der Druckplatte zur Einstellung der Federkraft veränderbar ist. Die Einstellung der Druckplatte kann mit Hilfe eines mit einem Außengewinde versehenen Tragbolzens erfolgen, welcher die Feder durchgreift, mit einem Ende an dem Träger befestigt und mit dem anderen Ende längsverschiebbar an dem Gestell geführt ist.

Ein wesentlicher Aspekt der erfindungsgemäßen Antriebsanordnung besteht auch darin, daß es möglich ist, mittels des Tragbolzens die Vorspanneinheit, die Druckfeder zu komprimieren. Hierdurch wird das Antriebselement (der Keilriemen) entlastet. Es ist somit auf besonders einfache Weise möglich, das Antriebselement zu wechseln. Weiterhin dient diese komprimierte Stellung zum Transport der Antriebsanordnung, da Beschädigungen des Keilriemens, wie Stöße etc. ausgeschlossen werden.

Bei der erfindungsgemäßen Antriebsanordnung ist es möglich, die Arbeitsmaschine oberhalb oder neben dem Motor anzuordnen. In beiden Fällen ergibt sich die gewünschte automatische Vorspannung.

Im folgenden wird die Erfindung anhand eines Ausführungsbeispieles in Verbindung mit der Zeichnung beschrieben. Dabei zeigt:
- Fig. 1: eine schematische Seitenansicht der erfindungsgemäßen Antriebsanordnung,
- Fig. 2: eine stirnseitige Ansicht, ähnlich Fig. 1, eines Ausführungsbeispiels der erfindungsgemäßen Antriebsanordnung,
- Fig. 3: eine vergrößerte Darstellung der in Fig. 2 gezeigten Vorspanneinheit,
- Fig. 4: eine Seitenansicht der in Fig. 2 gezeigten Anordnung,
- Fig. 5: eine Draufsicht auf das Gestell und den Träger gemäß der Anordnung der Fig. 2 bis 4, und
- Fig. 6: eine Seitenansicht, teils im Schnitt, der in Fig. 5 dargestellten Anordnung.

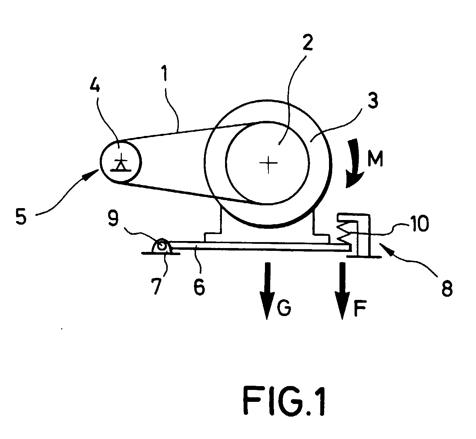

Die Fig. 1 zeigt in schematischer Weise die Ausgestaltung des erfindungsgemäßen automatischen Riementriebs. Dieser umfaßt ein endloses, umlaufendes Antriebselement 1, beispielsweise in Form eines Keilriemens. Das Antriebselement läuft über ein Antriebsrad 2 eines Motors 3 sowie über ein Abtriebsrad 4 einer Arbeitsmaschine 5. Diese kann beispielsweise in Form eines Verdichters zur Drucklufterzeugung ausgebildet sein.

Der Motor 3 ist auf einem Träger 6 befestigt, dieser ist in Form einer um eine horizontale Achse 9 schwenkbaren Wippe ausgebildet. Die Arbeitsmaschine 5 ist, ebenso wie das Lager der horizontalen Achse 9 an einem Gestell 7 gelagert, welches ortsfest aufgestellt ist.

Die Fig. 1 zeigt, daß eine vertikal nach unten gerichtete Gewichtskraft G des Motors zur Verschwenkung des Träger 6 nach unten wirkt. In gleicher Weise wirkt eine aus einem Rückstellelement M resultierende Kraft (in der gezeigten Darstellung dreht der Motor im Gegenuhrzeigersinn).

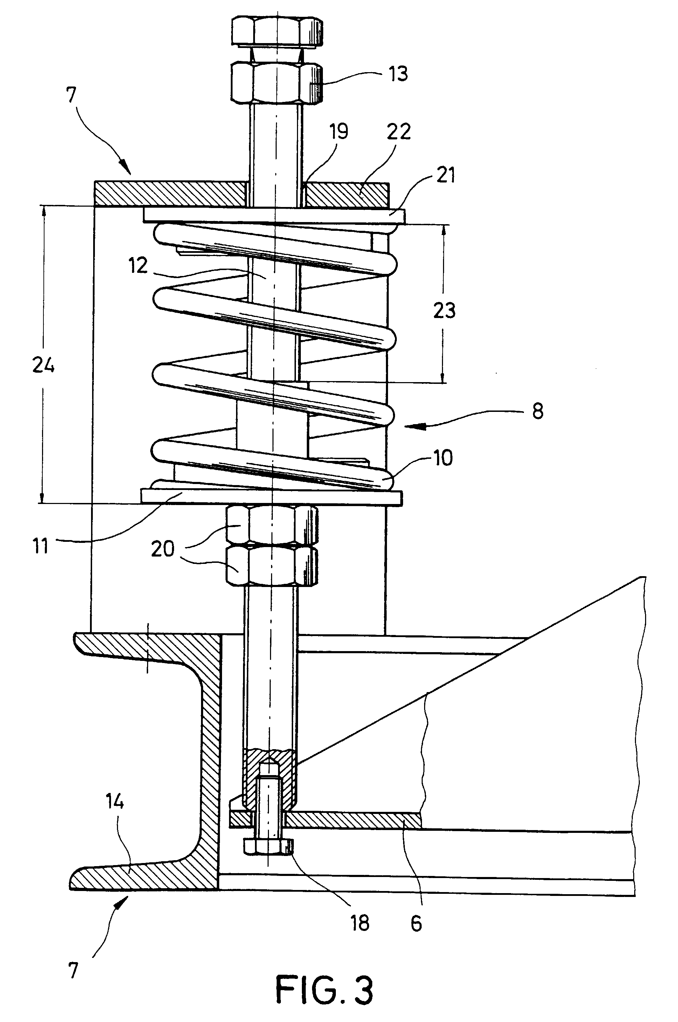

Am freien Ende des Trägers 6 ist eine Vorspanneinheit 8 ausgebildet, welche um einzelnen im Zusammenhang mit Fig. 3 beschrieben wird. Die Vorspanneinheit 8 umfaßt eine Druckfeder 10, durch welche eine nach unten gerichtete Federkraft F aufgebracht wird. Es ist ersichtlich, daß die Kräfte G, F und M zur Vorspannung des Antriebselementes 1 dienen.

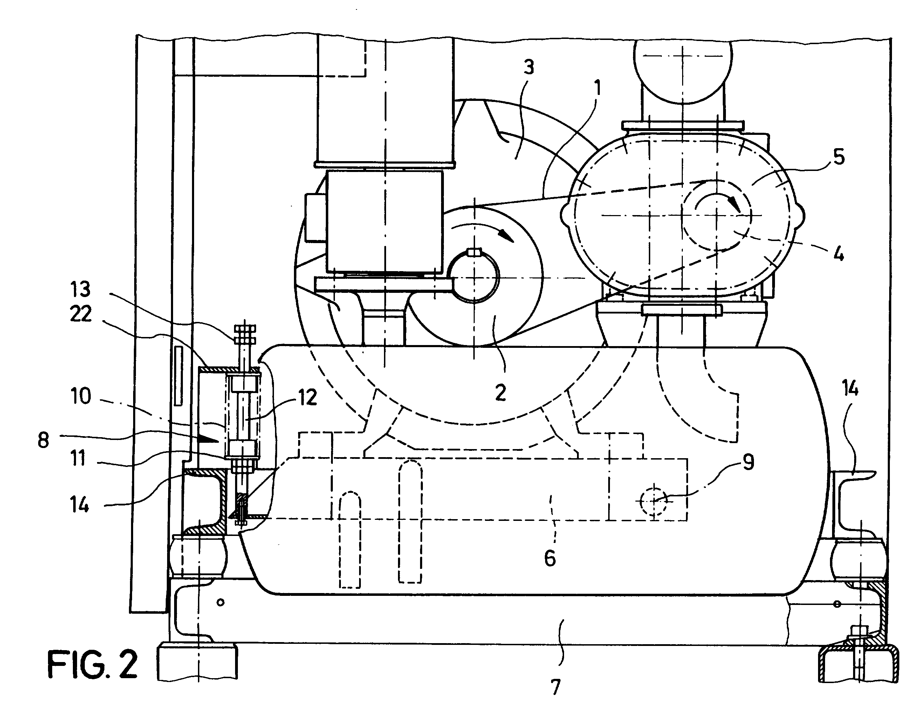

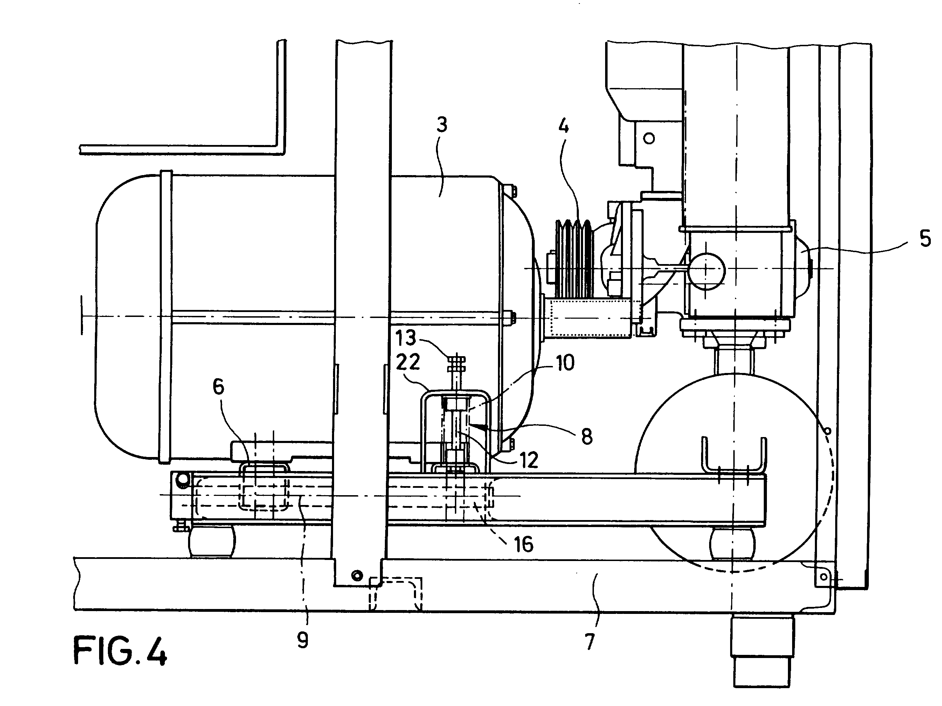

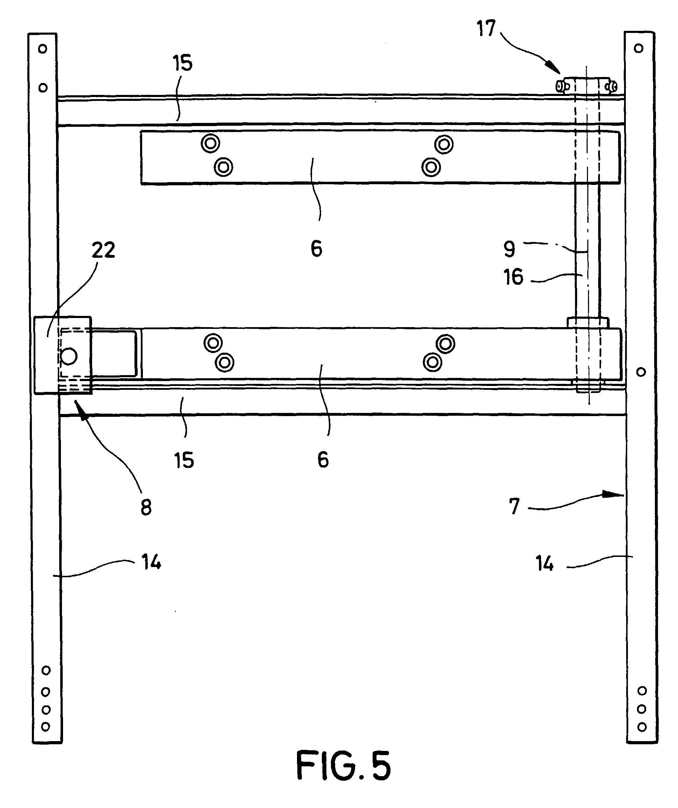

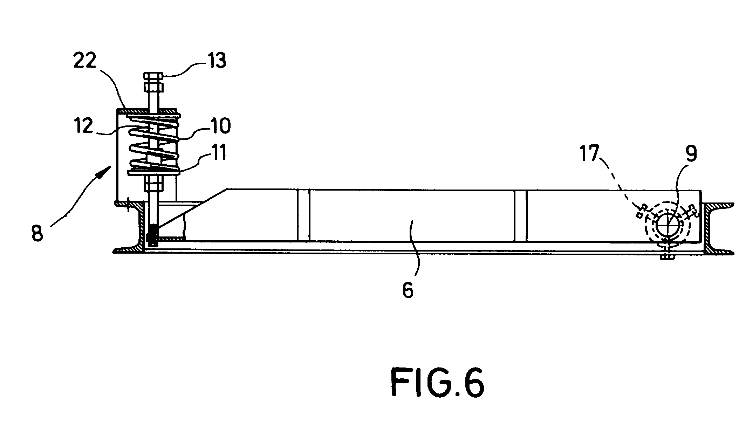

Die Fig. 2 bis 6 zeigen in vereinfachter Form eine konkrete Ausgestaltung der erfindungsgemäßen Antriebsanordnung. Das in Fig. 5 gezeigte Gestell 7 umfaßt zwei zueinander parallele Längstraversen, welche mittels Quertraversen 15 verbunden sind. In den Quertraversen 15 ist eine Schwenkwelle 16 gelagert, welche um eine horizontale Achse 9 verschwenkbar ist. Die Fig. 6 zeigt, daß zur Justierung der Lage der Schwenkwelle 16 drei Stellschrauben 17 vorgesehen sind.

An der Schwenkwelle 16 ist, wie in Fig. 5 gezeigt, ein Träger 6 befestigt. Dieser umfaßt zwei zueinander parallele Bauelemente, auf welchen der Motor 3 gelagert ist.

Am freien Ende des Trägers 6 ist die Vorspanneinheit 8 ausgebildet. Diese umfaßt, wie insbesondere in Fig. 3 dargestellt, einen vertikal angeordneten Tragbolzen 12, welcher mittels einer Schraube 18 mit dem Träger 6 verbunden ist. Der Tragbolzen 12 ist mit einem Außengewinde versehen, er durchgreift die Druckfeder 10 und gleitet mit seinem oberen Ende durch eine Ausnehmung 19 des Gestells 7.

Unterhalb der Druckfeder 10 ist eine Druckplatte 11 angeordnet, deren Stellung durch Muttern 20 relativ zu dem Tragbolzen 12 fixiert ist. Das obere Ende der Druckfeder 10 liegt über eine Gegendruckplatte 21 gegen einen Stützbereich 22 des Gestells 7 an. Mittels eines Anschlags 13, welcher in Form einer Mutter ausgebildet ist, ist es möglich, den Tragbolzen 12 nach oben gegen die Kraft der Druckfeder 10 vorzuspannen. Dieser mögliche Vorspannweg ist in Fig. 3 durch das Bezugszeichen 23 angegeben. Das Bezugszeichen 24 zeigt die Spannlänge der Druckfeder 10.

Bei der beschriebenen Anordnung ist es möglich, die Vorspanneinheit 8 werksseitig bei der Montage einzujustieren. Gleiches gilt für die Achsparallelität des Motors 3 und der Arbeitsmaschine 5, welche mittels der Stellschrauben 17 eingestellt werden kann. Diese Einstellungen bleiben während der gesamten Lebensdauer der Antriebsanordnung unverändert.

Mittels der erfindungsgemäß vorgesehen Druckfeder ist es möglich, auch bei unterschiedlich schweren Motoren eine konstante Vorspannkraft aufzubringen.

Zusammenfassend ist folgendes festzustellen:

Die Erfindung bezieht sich auf eine Antriebsanordnung mit einem endlosen, umlaufenden Antriebselement (1), welches über ein Antriebsrad (2) eines Motors (3) und ein Abtriebsrad (4) einer Arbeitsmaschine (5) läuft, sowie mit einer Spanneinrichtung für das Antriebselement (1), dadurch gekennzeichnet, daß der Motor (3) auf einem Träger (6) angeordnet ist, welcher lageveränderbar an einem Gestell (7), welches die Arbeitsmaschine (5) trägt, gelagert ist und welcher sowohl durch die Gewichtskraft (G) des Motors (3) als auch durch eine im wesentlichen parallel zur Gewichtskraft (G) des Motors (3) wirkende Vorspannkraft (F) einer Vorspanneinheit (8) vertikal nach unten vorgespannt ist. (Fig. 1).

## Patentansprüche

1. Transportable Antriebsordnung mit einem endlosen, umlaufenden Antriebselement (1), welches über ein Antriebsrad (2) eines Motors (3) und ein Abtriebsrad (4) einer Arbeitsmaschine (5) läuft, sowie mit einer Spanneinrichtung für das Antriebselement (1), wobei der Motor (3) auf einem Träger (6) angeordnet ist, welcher lageveränderbar an einem Gestell (7), welches die Arbeitsmaschine (5) trägt, gelagert und in Form einer um eine horizontale Achse (9) schwenkbaren Wippe ausgebildet ist, wobei die Spanneinrichtung sowohl durch die Gewichtskraft (G) des Motors (3) als auch durch eine Vorspannkraft (F) einer Feder vorgespannt ist,
dadurch gekennnzeichnet,
- daß der Träger (6) durch die Summe der Gewichtskraft (G) des Motors (3) und der Vorspannkraft (F) der Feder (10) vertikal nach unten vorgespannt ist,
- daß die Feder eine Druckfeder (10) ist, welche zwischen einem mit dem Träger (6) verbundenen Widerlager (11) und einem dem Gestell (7) zugeordneten Widerlager (21) angeordnet ist,
- wobei das mit dem Träger (6) verbundene Widerlager (11) zur Einstellung der Federkraft in der Betriebsstellung relativ zu dem Träger (6) verstellbar ist, und
- daß Mittel (12, 13) vorgesehen sind, um die Feder (10) zum Transport der Antriebsanordnung zu komprimieren.

2. Transportable Antriebsordnung nach Anspruch 1, dadurch gekennzeichnet,
- daß an dem Träger (6) ein die Druckfeder (10) durchgreifender Tragbolzen (12) befestigt ist, an welchem verstellbar das Widerlager (11) gelagert ist und
- daß das freie Ende des Tragbolzens (12) eine Öffnung (19) des Gestells (7) durchgreift und mit einem verstellbaren Anschlag (13) versehen ist.

3. Transportable Antriebsordnung nach einem der Ansprüche 1 oder 2, dadurch gekennzeichnet, daß die Druckplatte (11) mittels Gewindeeingriff relativ zu dem Tragbolzen (12) verstellbar ist.

4. Transportable Antriebsordnung nach einem der Ansprüche 1 bis 3, dadurch gekennzeichnet, daß der Anschlag (13) mittels Gewindeeingriff relativ zu dem Tragbolzen (12) verstellbar ist.

## Claims

1. A transportable drive arrangement having an endless, rotating drive element (1), which runs over a driving wheel (2) of a motor (3) and a driven wheel (4) of a machine (5), and also having a tensioning device for the drive element (1), wherein the motor (3) is disposed on a support (6), which is mounted in a positionally adjustable manner on a stand (7) bearing the machine (5) and is constructed in the form of a rocker swinging about a horizontal axis (9), wherein the tensioning device is prestressed both by the weight (G) of the motor (3) and also by a prestressing force (F) of a spring,
**characterised**
- **in that** the support (6) is prestressed vertically downwards by the sum of the weight (G) of the motor (3) and the prestressing force (F) of the spring (10),
- **in that** the spring is a pressure spring (10) which is disposed between an abutment (11) connected to the support (6) and an abutment (21) associated with the stand (7),
- wherein the abutment (11) connected to the support (6) can be adjusted to set the spring resistance in the operating position in relation to the support (6), and
- **in that** means (12, 13) are provided to compress the spring (10) for the transport of the drive arrangement.

2. A transportable drive arrangement according to Claim 1,
**characterised**
- **in that** attached to the support (6) is a supporting bolt (12) passing through the pressure spring (10), on which bolt the abutment (11) is adjustably mounted and
- **in that** the free end of the supporting bolt (12) passes through an aperture (19) in the stand (7) and is provided with an adjustable stop (13).

3. A transportable drive arrangement according to one of Claims 1 or 2, **characterised in that** the pressure plate (11) can be adjusted by means of thread meshing in relation to the supporting bolt (12).

4. A transportable drive arrangement according to one of Claims 1 to 3, **characterised in that** the stop (13) can be adjusted by means of thread meshing in relation to the supporting bolt (12).

## Revendications

1. Système d'entraînement transportable muni d'un élément d'entraînement (1) circulant sans fin, lequel passe sur une roue d'entraînement (2) d'un moteur (3) et sur une roue menée (4) d'une machine de travail (5), ainsi qu'un dispositif tendeur pour l'élément d'entraînement (1), le moteur (3) étant disposé sur un support (6), lequel est monté, de manière à pouvoir changer de position, sur un bâti (7) qui supporte la machine de travail (5), et qui est conçu sous la forme d'une bascule inclinable autour d'un axe horizontal (9), le dispositif tendeur étant prétendu aussi bien par le poids (G) du moteur (3) que par une force de précontrainte (F) d'un ressort, caractérisé en ce que
- le support (6) est précontraint verticalement vers le bas par la somme du poids (G) du moteur (3) et de la force de précontrainte (F) du ressort (10),
- le ressort est un ressort de pression (10), qui est situé entre un contre-appui (11) relié au support (6) et un contre-appui (21) adjoint au bâti (7),
- le contre-appui (11) relié au support (6) étant ajustable par rapport au support (6) pour assurer le réglage de la force du ressort dans la position de marche, et
- en ce que des moyens (12, 13) sont prévus pour comprimer le ressort (10) pour le transport du système d'entraînement.

2. Système d'entraînement transportable selon la revendication 1, caractérisé en ce que
- sur le support (6) est fixé un boulon porteur (12) qui passe à travers le ressort de pression (10), et sur lequel le contre-appui (11) est monté de manière réglable, et
- l'extrémité libre du boulon porteur (12) passe à travers une ouverture (19) du bâti (7) et est munie d'une butée réglable (13).

3. Système d'entraînement transportable selon l'une quelconque des revendications 1 et 2, caractérisé en ce que la plaque d'appui (11) est réglable par rapport au boulon porteur (12) au moyen d'une prise filetée.

4. Système d'entraînement transportable selon l'une des revendications 1 à 3, caractérisé en ce que la butée (13) est réglable par rapport au boulon porteur (12) au moyen d'une prise filetée.
